# EUROPÄISCHE PATENTSCHRIFT

(11) **EP 1 038 110 B1**
(45) Veröffentlichungstag und Bekanntmachung des Hinweises auf die Patenterteilung: **06.07.2005**
(21) Anmeldenummer: 98948864.8
(22) Anmeldetag: 25.08.1998
(51) Int. Cl.: F16B 5/02, F02M 35/10, F16B 37/00

(54) **FORMSCHLUSSVERBINDUNG**
FORM LOCKING ARRANGEMENT
ASSEMBLAGE PAR LIAISON DE FORME

(30) Priorität: 26.08.1997 DE 19736881
(43) Veröffentlichungstag der Anmeldung: 27.09.2000
(73) Patentinhaber: Mann + Hummel GmbH, 71638 Ludwigsburg (DE)
(72) Erfinder: GEIGER, Michael, D-71691 Freiberg/Neckar (DE); JESSBERGER, Thomas, D-71277 Rutesheim (DE); MAIER, Stefan, D-74354 Besigheim (DE)
(74) Vertreter: Voth, Gerhard, Dipl.-Ing.
(86) Internationale Anmeldenummer: PCT/EP1998/005384
(87) Internationale Veröffentlichungsnummer: WO 1999/010658

(56) Entgegenhaltungen:
- EP-A- 0 474 397
- CH-A- 512 923
- DE-A- 19 613 279
- DE-U- 29 709 250
- US-A- 4 289 061
- US-A- 5 704 749

## Beschreibung

Die Erfindung betrifft eine Formschlußverbindung nach dem Oberbegriff des unabhängigen Anspruchs 1.

Aus der DE 1472371 A1 ist eine Paß- oder Zentriervorrichtung fur miteinander zu verbindende Bauteile bekannt. Dieser liegt die Aufgabe zugrunde, eine Fertigungsmethode zu schaffen, die in Großserie und Massenfertigungen angewendet werden kann und eine gute Lagegenauigkeit der zu verbindenden Teile ermöglicht. Hierzu wird eines der zu verbindenden Teile mit einem federwirksamen Element ausgestattet. Dieses federwirksame Element soll Toleranzen ausgleichen.

Ein Nachteil des Systems besteht darin, daß die federnde Befestigung eines Paßelementes sehr hohe Ungenauigkeiten zuläßt und damit der Eindruck erweckt wird, daß auch bei extremen Toleranzen eine Paßgenauigkeit erzielt wird. Dieser Gefahr läßt sich bei der Verwendung eines federwirksamen Elements nicht begegnen.

Es ist weiterhin aus der DE 3735936 C1 eine Verbindung bekannt, bei der ein Kunststoffbauteil an einer Platte befestigt wird. Das Kunststoffbauteil weist wenigstens einen Zapfen auf, der in eine Öffnung der Platte einsteckbar und so verstauchbar ist, daß er die Öffnung auf der dem Kunststoffbauteil gegenüberliegenden Seite der Platte hintergreift. Damit wird zwar eine gewisse Dauerhaftigkeit der Verbindung erzielt. Es ist jedoch nicht gewährleistet, daß bestimmte Toleranzgrenzen eingehalten werden können.

Die DE 3517410 A1 beschreibt eine Vorrichtung zum Festlegen lösbar verbindbarer Teile, bei welcher im Rahmen einer Schraubverbindung zwei kegelförmige Teile miteinander in Eingriff gebracht werden und eines der kegelförmigen Teile eine Aufweitung erfährt und sich so in einer Öffnung zentriert. Dieses Befestigungsverfahren ist aufwendig und nur dort zu verwenden wo metallische Werkstoffe aufeinander treffen.

Bei der Verbindung von Kunststoffbauteilen muß berücksichtigt werden, daß der Kunststoff über einen längeren Zeitraum betrachtet fließt und damit die Spannung solcher Verbindungselemente verloren geht.

Der Erfindung liegt die Aufgabe zugrunde, die genannten Nachteile zu vermeiden und eine Formschlußverbindung zu schaffen, die eine hohe Paßgenauigkeit aufweist, gleichzeitig aber geringfügige Toleranzen zuverlässig ausgleicht.

Diese Aufgabe wird ausgehend von dem Oberbegriff des unabhängigen Anspruchs 1 durch dessen kennzeichnende Merkmale gelöst.

Der wesentliche Vorteil der Erfindung ist darin zu sehen, daß zunächst ein erstes Paßungselement eine genaue Zentnerung des Kunststoffbauteils an einer Trägerstruktur ermöglicht. Ein zweites Paßungselement ist so gestaltet, daß es Toleranzen zumindest in einer Lagerichtung ausgleicht. Dieses zweite Paßungselement kann beispielsweise ein Stift sein, der in einem Langloch angeordnet wird. Es besteht auch die Möglichkeit, eine Rippe in einer Bohrung vorzusehen.

Ein weiterer Vorteil der Erfindung liegt darin, daß Betriebskräfte im Verbindungsbereich die beispielsweise durch Erschütterungen, Schwingungen oder statische Belastungen entstehen durch die Formschlußverbindung wirksam aufgenommen werden können.

Das erste Passungselement ist beispielsweise ein Paßstift, der in eine Bohrung eingreift oder es sind eine oder mehrere Anlagerippen die auf der Trägerstruktur befestigt sind und das Kunststoffbauteil lagerichtig fixieren.

Gemäß einer Ausgestaltung der Erfindung ist das toleranzausgleichende Paßungselement in wenigstens einer Richtung lagetolerant. Je nach Größe der zulässigen Toleranz läßt sich die Lagegenauigkeit definieren.

Eine weitere Ausgestaltung der Erfindung sieht vor, das toleranzausgleichende Paßungselement als verformbaren Profilzapfen auszubilden. Gerade die Verwendung von Kunststoff schafft mehrere Möglichkeiten um einen Zapfen derart zu gestalten, daß er beispielsweise mit einem Spreizelement wie einer Schraube oder einem Preßstift aufgeweitet werden kann und damit eine toleranzausgleichende Verbindung schafft.

Eine weitere Ausgestaltung der Erfindung sieht vor, eine formschlüssige Verbindung im Bereich des toleranzausgleichenden Paßungselementes, dadurch zu schaffen, daß in diesem Bereich eines der zu verbindenden Bauteile Elemente aufweist, welche eine Kerbwirkung verursachen. Diese Elemente können beispielsweise Erhöhungen, Spitzen oder Riefen sein, die sich in das benachbarte Bauteil einprägen. Die Formschlußverbindung kann zur zusätzlichen Sicherung bzw. zur Befestigung mit einer Schnappverbindung versehen sein. Diese Schnappverbindung schafft eine lösbare oder eine unlösbare Koppelung der beiden Bauteile.

Die Anwendung der Formschlußverbindung kann in vorteilhafter Weise bei thermoplastischem Kunststoffbauteilen z. B. im Ansaugbereich von Brennkraftmaschinen angewendet werden. Dort sind eine Vielzahl thermoplastischer Bauteile wie z. B. Luftfiltergehäuse, Drosselklappenstutzen, Ansaugrohre, Ansaugkrümmer, Warm- Kaltluftklappen und ähnliches vorgesehen, die lagerichtig und mit hoher Genauigkeit verbunden werden müssen. Hierzu bietet sich die genannte Formschlußverbindung an.

Die Erfindung wird nachfolgend anhand von Ausführungsbeispielen näher erläutert

Es zeigt
- Figur 1: Eine erste Ausgestaltung einer Formschlußverbindung
- Figur 2-4: Weitere Varianten einer Formschlußverbindung
- Figur 5, 6: Eine Verbindung mit spielfreier Befestigung
- Figur 7-9: Varianten einer weiteren spiefreien Befestigung
- Figur 10: Eine Formschlußverbindung mit kerbwirkenden Elementen

Üblicherweise werden Anbauteile über metallische Gewindeeinsätze und metrische Schrauben an Kunststoffbauteilen befestigt. Dies geschieht insbesondere bei dynamisch belasteten Bauteilen, wie z. B. Drosselklappen an einem Motorsaugrohr aus Kunststoff. Anbauteile an dynamisch unbelasteten Kunststoffen oder Anbauteilen von geringer Masse werden bereits seit längerem über selbstformende Schrauben direkt an das Kunststoffteil angeschraubt. Durch die Relaxation des Kunststoffes wird die axiale Vorspannkraft der Schraube abgebaut und eine Reibschlußverbindung wie im Metallbereich üblich, ist nicht mehr vorhanden. Dadurch kann sich das Anbauteil bei dynamischer Belastung relativ zum Kunststoffteil bewegen.

Die Verwendung von metallischen Gewindeeinsätzen hat gewisse Nachteile. Zum einem sind die Kosten für das Insert hoch, außerdem sind die Montagekosten sowie die Kosten durch erhöhten Ausschuß, aufgrund falsch eingebrachter Inserts nicht unerheblich. Ein weiterer Nachteil ist das zusätzliche Gewicht der Metallteile und die schlechte Wiederverwertbarkeit der Kunststoffteile, da sämtliche Metallteile bei dem Wiederverwerten des Kunststoffes zunächst entfernt werden müssen.

Werden gemäß der Erfindung Paßsysteme verwendet, dann kann durch die Anwendung selbstformender Schrauben über eine formschlüssige Verbindung ein metallisches Insert ersetzt werden. Dadurch kann auch die axiale Vorspannkraft der Schraube bis auf einen minimalen Wert abbauen ohne daß die Verbindung sich löst. Somit sind sämtliche Belastungsrichtungen abgesichert, die Flanschebene durch die formschlüssige Verbindung und die Schraubenachse durch die Anlage des Schraubenkopfes am Kunststoff. Die Erzeugung des Formschlußes kann auf verschiedene Weisen erfolgen, dies wird anhand der nachfolgenden Figuren beschrieben

In den Figuren ist beispielsweise ein Drosselklappenstutzen als Bauteil 10 gezeigt, welcher auf einer insbesondere aus Kunststoff bestehenden Trägerstruktur 27, beispielsweise einem Ansaugtrakt einer Brennkraftmaschine befestigt werden muß. Das Bauteil 10 weist einen Rahmen 11 auf, der mit vier Befestigungslöchern 12, 13, 14, 15 versehen ist sowie einer Paßöffnung 16 und einem Langloch 17. In dem Rahmen 11 ist eine Drosselklappe 18 auf einer Welle 19 angeordnet und drehbar gelagert. In die Paßöffnung 16 greift ein Paßstift 20 der Trägerstruktur ein. In das Langloch 17 greift ebenfalls ein Stift 21 ein, dessen Durchmesser im wesentlichen der Breite des Langloches entspricht Aufgrund des Langloches besteht die Möglichkeit, geringfügige Toleranzen der einzelnen Paßstücke zueinander auszugleichen. Anstelle eines Langlochs besteht auch die Möglichkeit, eine Paßbohrung 22 im Rahmen 11 vorzusehen. In diese Paßbohrung greift eine Rippe 23 der Trägerstruktur ein. Auch durch diese Anordnung ist ein geringfügiger Toleranzausgleich möglich.

Der weitere Stift 21 oder die Rippe 23 wird so toleriert, daß dieses Element kein Spiel in der Öffnung aufweist bzw unter leichter Vorspannung in die Öffnung eingreift. Durch diese Abstandstoleranz erfolgt eine leichte Deformation des Elements. Diese Deformation trägt zu einer hoch beanspruchbaren Verbindung bei.

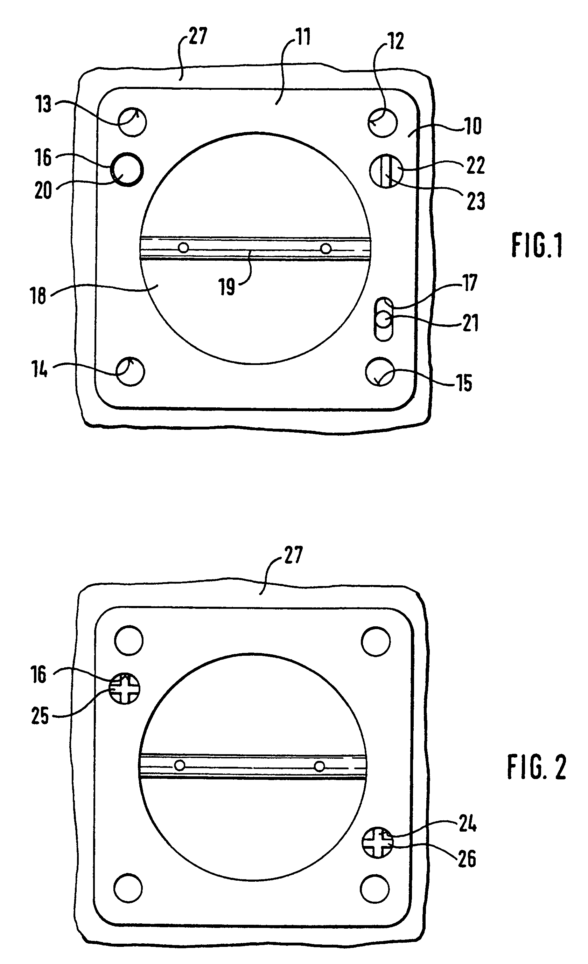

Figur 2 zeigt eine Variante der Befestigung eines Drosselklappenstutzens an einer Trägerstruktur. Gleiche Teile sind mit gleichen Bezugszeichen versehen, dies gilt auch für die weiteren Figuren. Anstelle von Paßstiften greifen in die Paßöffnungen 16, 24 genngfügig verformbare Profilzapfen 25, 26 ein. Die Profilzapfen sind wie in Figur 1 gezeigt unmittelbar an der Trägerstruktur angeordnet. Die Befestigung des Drosselklappenstutzens an der Trägerstruktur erfolgt über entsprechende Schraubverbindungen, wobei die Schrauben in den Figuren nicht dargestellt sind.

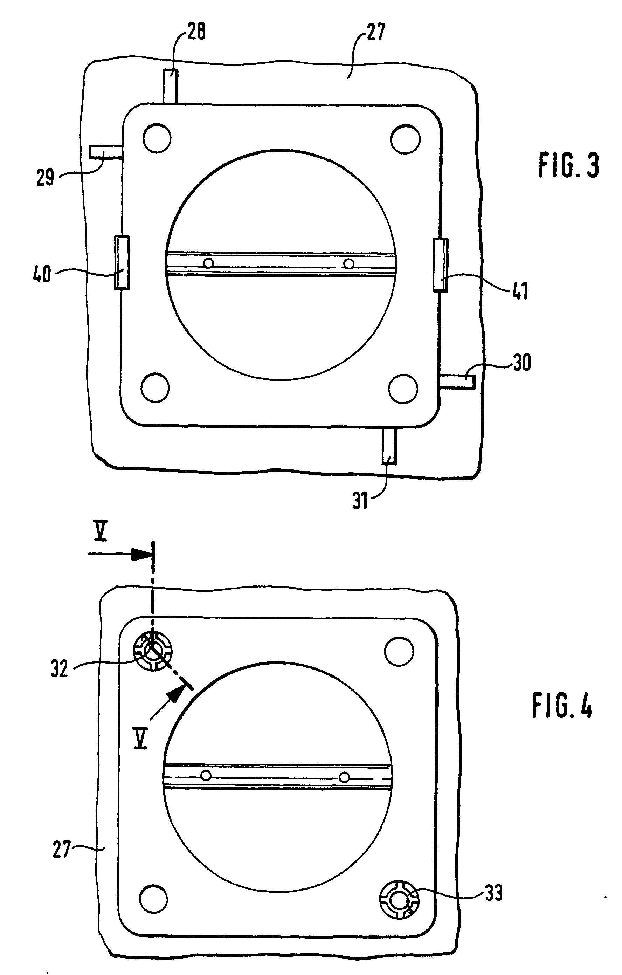

Figur 3 zeigt eine Befestigung an einer Trägerstruktur 27, welche Anlagenrippen 28, 29, 30, 31 aufweist. Durch die Positionierung der Anlagerippen in gegenüberliegenden Ecken besteht auch hier die Möglichkeit, daß eine geringfügige toleranzausgleichende Verschiebung und Fixierung des Bauteils 10 an der Trägerstruktur 27 möglich ist. Anstelle der Befestigung über Schraubenverbindungen besteht auch die Möglichkeit, das Bauteil 10 mit Schnappverbindungen 40, 41 an der Trägerstruktur zu fixieren.

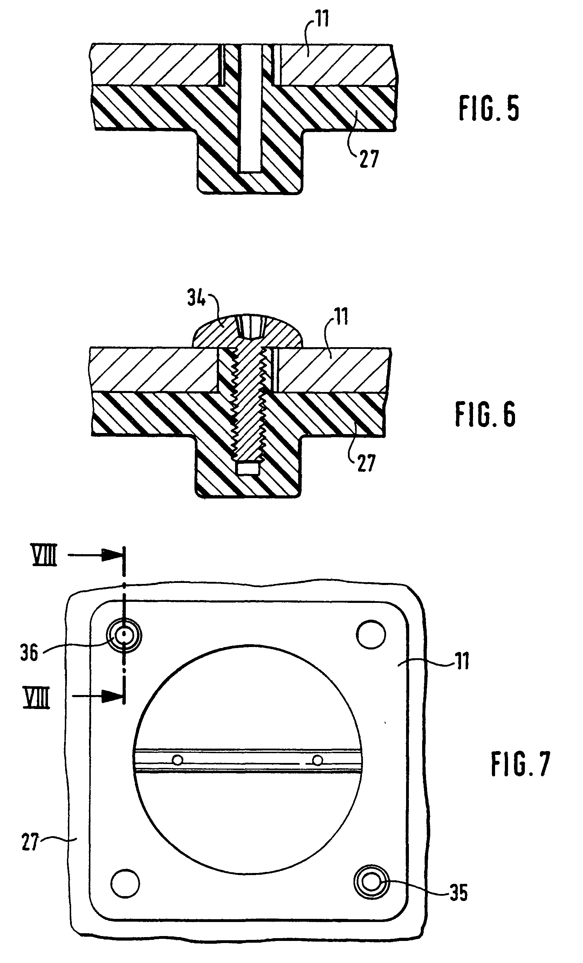

Figur 4 zeigt eine Befestigungsart, bei welcher an der Trägerstruktur 27 aufweitbare Flanschringe 32, 33 vorgesehen sind, die geschlitzt sind. Sie bestehen im Befestigungsbereich lediglich aus vier Stegen. Diese Flanschringe sind, wie in Figur 5, Schnitt V-V der Figur 4, dargestellt mit einer Bohrung versehen. In die Bohrung greift eine Schraube 34 ein und weitet die Flanschringe im Bereich der Befestigung des Rahmens 11 auf, so daß ein spielfreie Verbindung zwischen Rahmen 11 und Trägerstruktur 27 gewährleistet ist. Der Vorteil dieser Verbindungsart besteht darin, daß im Rahmen 11 für die Paßverbindung keine zusätzlichen Öffnungen erforderlich sind.

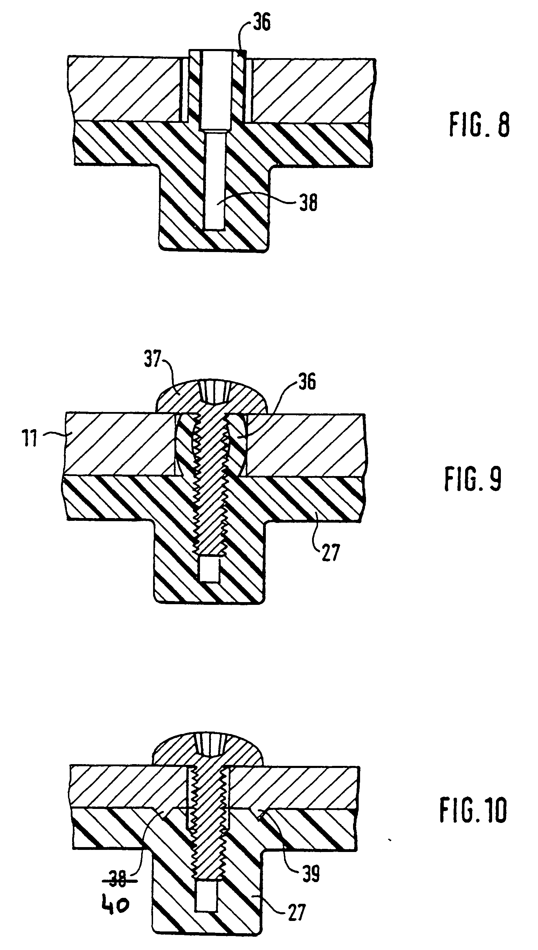

Figur 7 zeigt eine Variante der in Figur 6 dargestellten Verbindungsart. An der Trägerstruktur 27 befinden sich die Ringflanschelemente 35, 36. Der Ringflansch 35, 36 ist geringfügig höher als der zu befestigende Rahmen 11. Dies ist in Figur 8 dargestellt. Bei dem Eindrehen einer Schraube 37 in die Trägerstruktur 27, gemäß Figur 9 verformt sich der Ringflansch 36, wölbt sich im Bereich des Rahmens 11 nach außen und führt so zu einer lagerichtigen Positionierung dieses Rahmens. Während im unteren Teil der Bohrung 38 in der Trägerstruktur 27 ein Gewinde vorgesehen ist bzw. durch die Schraube ein Gewinde geschnitten wird, ist der obere Bereich der Bohrung soweit vergrößert, daß dort das Gewinde nicht mit dem Ringflansch in Eingriff gelangt, so daß eine Verformung des Ringflansche ohne weiteres möglich ist.

Figur 10 zeigt die Schnittdarstellung eines Verbindungselementes zwischen dem Rahmen 11 und der Trägerstruktur 27. Der Rahmen 11 weist kerbwirkende Elemente 39, 40 auf. Diese verursachen bei der Verschraubung eine Einkerbung im Trägerteil 27 und damit eine formschlüssige Verbindung.

Selbstverständlich sind weitere kerbwirkende Elemente oder auch anders gestaltete kerbwirkende Elemente denkbar.

## Patentansprüche

1. Formschlussverbindung zwischen einem Kunststoffbauteil und einer Trägerstruktur, **dadurch gekennzeichnet, dass** die Verbindung einerseits über selbstformende Schrauben hergestellt ist die direkt in das Kunststoffmaterial geschraubt sind, und dass andererseits wenigstens ein Passungselement (20) zur ersten Zentrierung von Kunststoffbauteil und Trägerstruktur und wenigstens ein weiteres, toleranzausgleichendes Passungselement (23) vorgesehen ist, welches zum Ansgleich der Relaxation des Kunststoffs im Bereich der Schrauben im verbundenen Zustand eine leichte Deformation aufweist, derart, dass das weitere toleranzausgleichende Passungselement (23) das Kunststoffbauteil an der Trägerverbindung in der Flanschebene sichert.

2. Formschlußverbindung nach Anspruch 1, **dadurch gekennzeichnet, dass** das erste Passungselement wenigstens ein Stift (20) oder wenigstens eine Rippe ist und das weitere toleranzausgleichende Passungselement ein in wenigstens einer Richtung lagetolerantes Passungselement (23) ist.

3. Formschlußverbindung nach Anspruch 2, **dadurch gekennzeichnet, dass** das lagetolerante Passungselement ein verformbarer Profilzapfen (36) ist, welcher insbesondere eine Öffnung zur Aufnahme eines Spreizelements (37) aufweist.

4. Formschlußverbindung nach einem der vorigen Ansprüche, **dadurch gekennzeichnet, dass** im Bereich des toleranzausgleichenden Passungselementes ein, eine Kerbwirkung verursachendes Element (38, 39) vorgesehen ist zur formschlüssigen Verbindung des Bauteils (10) an der Trägerstruktur (11) im Bereich des toleranzausgleichenden Passungselements.

5. Formschlußverbindung nach einem der vorigen Ansprüche, insbesondere zur Verwendung bei der Befestigung eines Ansaugsystems einer Brennkraftmaschine an einer Trägerstruktur, wobei das Ansaugsystem und / oder die Trägerstruktur aus Kunststoff besteht.

6. Formschlußverbindung nach einem der vorigen Ansprüche, **dadurch gekennzeichnet, dass** das Bauteil ein Drosselklappengehäuse ist, welches im Ansaugbereich einer Brennkraftmaschine angeordnet ist.

7. Formschlußverbindung nach einem der vorigen Ansprüche, **dadurch gekennzeichnet, dass** Schnappverbindungen (40, 41) vorgesehen sind, die nach der Lagepositionierung der Teile eine unlösbare Verbindung bewirken.

## Claims

1. Form-fitting connection between a plastics material component and a carrier structure, **characterised in that** the connection is produced on the one side by means of self-tapping screws which are screwed directly into the plastics material, and **in that** on the other side at least one fitting element (20) is provided for the initial centring of the plastics material component and the carrier structure and at least one additional fitting element (23) is provided for tolerance compensation, said additional fitting element includes slight deformation in the connected condition to compensate for the relaxation of the plastics material in the region of the screws, such that the additional fitting element (23) providing the tolerance compensation secures the plastics material component to the carrier connection in the flange plane.

2. Form-fitting connection according to claim 1, **characterised in that** the first fitting element is at least one pin (20) or at least one nb and the additional fitting element for tolerance compensation is a fitting element (23) which is positionally tolerant in at least one direction.

3. Form-fitting connection according to claim 2, **characterised in that** the positionally tolerant fitting element is a deformable profile tenon (36), which includes more especially an opening for accommodating a spreading element (37).

4. Form-fitting connection according to one of the preceding claims, **characterised in that** an element (38, 39), which gives rise to a notch effect, is provided in the region of the fitting element providing tolerance compensation for the form-fitting connection of the component part (10) to the carrier structure (11 ) in the region of the fitting element providing tolerance compensation.

5. Form-fitting connection according to one of the preceding claims, more especially for use in the securing of an intake system of an internal combustion engine to a carrier structure, wherein the intake system and/or the carrier structure are produced from plastics material.

6. Form-fitting connection according to one of the preceding claims, **characterised in that** the component is a throttle valve housing, which is disposed in the intake region of an internal combustion engine.

7. Form-fitting connection according to one of the preceding claims, **characterised in that** there are provided snap-type connections (40, 41), which effect a non-detachable connection once the parts have been placed in position.

## Revendications

1. Assemblage par complémentarité de forme entre un composant en matière plastique et une structure porteuse,
**caractérisé en ce que**
l'assemblage est réalisé d'une part par des vis autotaraudeuses directement vissées dans la matière plastique et, d'autre part sont prévus, au moins un élément d'ajustement (20) pour le premier centrage du composant en matière plastique et de la structure porteuse et au moins un autre élément d'ajustement (23) compensateur de tolérance, lequel présente une légère déformation à l'état assemblé pour compenser la relaxation de la matière plastique au niveau des vis, de sorte que cet élément d'ajustement (23) compensateur de tolérance bloque le composant en matière plastique à la jonction du support au niveau des brides.

2. Assemblage par complémentarité de forme selon la revendication 1,
**caractérisé en ce que**
le premier élément d'ajustement est au moins une cheville (20) ou une nervure et l'autre élément d'ajustement est un élément d'ajustement (23) de tolérance de position dans au moins une direction.

3. Assemblage par complémentarité de forme selon la revendication 2,
**caractérisé en ce que**
l'élément d'ajustement de tolérance de position est un tenon profilé défomable (36) ; qui présente notamment une ouverture pour recevoir une vis (37).

4. Assemblage par complémentarité de forme selon l'une quelconque des revendications précédentes,
**caractérisé en ce qu'**
élément (38, 39) provoquant un effet d'entaille pour l'assemblage par complémentarité de forme du composant (10) sur la structure porteuse (11) est prévu au niveau de l'élément d'ajustement compensateur de tolérance.

5. Assemblage par complémentarité de forme selon l'une quelconque des revendications précédentes, à utiliser notamment pour la fixation d'un système d'admission d'un moteur à combustion interne sur une structure porteuse, le système d'admission et/ou la structure porteuse étant constitués de matière plastique.

6. Assemblage par complémentarité de forme selon l'une quelconque des revendications précédentes,
**caractérisé en ce que**
le composant est un logement de papillon des gaz disposé dans la zone d'admission d'un moteur à combustion interne.

7. Assemblage par complémentarité de forme selon l'une quelconque des revendications précédentes,
**caracterise en ce que**
des assemblages à encliquetage (40, 41) sont prévus, provoquant un assemblage indétachable une fois les pièces positionnées.
